# EUROPEAN PATENT SPECIFICATION

(11) **EP 2 787 664 B1**
(45) Date of publication and mention of the grant of the patent: **15.05.2019**
(21) Application number: 12852984.9
(22) Date of filing: 22.11.2012
(51) Int. Cl.: H04J 3/06

(54) **TIME SYNCHRONIZATION METHOD AND APPARATUS**
ZEITSYNCHRONISATIONSVERFAHREN UND -VORRICHTUNG
PROCÉDÉ ET APPAREIL DE SYNCHRONISATION TEMPORELLE

(30) Priority: 01.12.2011 CN 201110393427
(43) Date of publication of application: 08.10.2014
(73) Proprietor: ZTE Corporation, Shenzhen, Guangdong 518057 (CN)
(72) Inventor: WANG, Bin, Guangdong 518057 (CN); ZHANG, Junhui, Guangdong 518057 (CN)
(74) Representative: Carpintero Lopez, Francisco
(86) International application number: PCT/CN2012/085078
(87) International publication number: WO 2013/078957

(56) References cited:
- EP-A1- 1 198 085
- WO-A1-2004/066530
- CN-A- 1 933 414
- CN-A- 101 217 330
- CN-A- 101 478 358
- US-A1- 2011 276 648
- US-B1- 7 103 072
- QUAN, YUJUAN ET AL.: 'Fault tolerance for timestamp DPLL in clock drifting compensation' APPLICATION RESEARCH OF COMPUTERS vol. 26, no. 11, 30 November 2009, XP055161150

## Description

### Technical Field

The present invention relates to the field of communications, in particular to a time synchronization method and apparatus.

### Background

At present, there are lots of frequently used time synchronization methods, including Precision Time Protocol (PTP), Network Time Protocol (NTP), Global Positioning System (GPS) and various other types of protocols and methods, the purpose of which is to synchronize the time of a network time slave device with a network time source.

Time distribution and correction on a device are ultimately performed on all synchronization results of a time synchronization protocol, so as to correct the running time of this device. The common methods for correcting the running time are to compare the time of the present device with the time calculated by the time synchronization protocol, and then make the time of the present device track the time calculated by the protocol, so that the deviation between the two time is small enough.

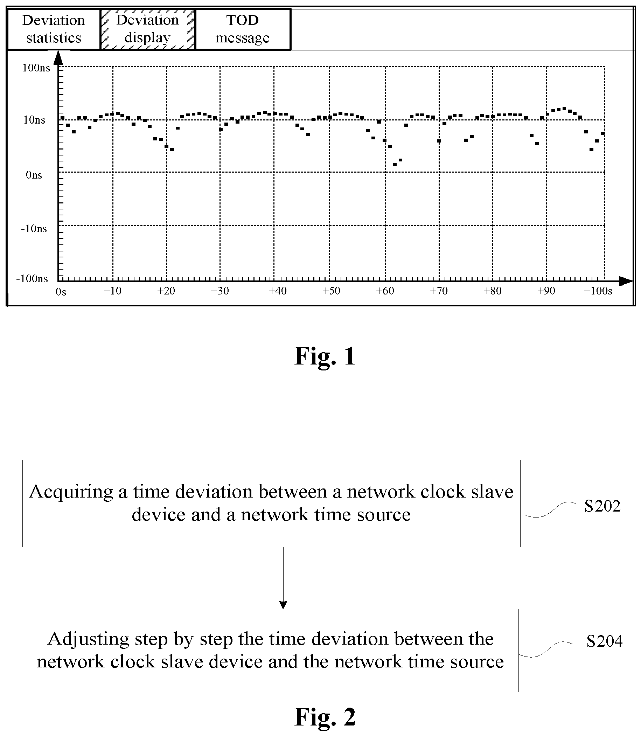

In practical application, however, time synchronization is always accompanied by jitters caused by various kinds of reasons, for example, synchronous source switching, line switching, link delay jitter, synchronization frequency jitter, and other environmental factors, etc. These interferences will influence the calculation result of a time synchronization deviation, and because the frequency correction of a digital electronic equipment *per se* has a certain limitation on precision, these factors combine together and ultimately make the system time of a slave clock device produce jitters or transients. At present, the International Telecommunications Union (ITU) standard G.812 stipulates the requirement on the phase output transient of frequencies, but there is no corresponding standard specification on the phase output transient of the 1588 time. In the related technology, jitter elimination mostly just performs common smoothing on the time deviation between a network clock slave device and a network time source, or a common filtering mode with a poor interference resistance capability is directly adopted, and especially in terms of the stability of the time deviation, situations where jitters are relatively large will occur. Fig. 1 is a schematic diagram of a measurement result of time deviation jitters after simple filtering is adopted according to the related technology. As shown in Fig. 1, time deviations outputted after simple filtering is adopted still have large jitters in lots of places. In fact, a large portion of these jitters does not really exist, but is outputted due to false operations resulted from algorithms, which on the contrary renders a bad result.

In addition, what is more important is that the correction mode adopted by existing network clock slave device is a direct one-time correction based on the calculated time deviation between the slave device and the network time source, which may cause the correction amplitude of the time deviation to be too large, thus influencing the synchronization effect.

WO2004/066530 discloses a system and method for controlling a time synchronization relationship between a communications network (100, 300) time and a module (110) located at a node connected to the communications network for providing a module reference time, and EP 1198085 discloses a method to perform a cycle synchronization between several interconnected sub-networks. However, the above mentioned problem still remains unsolved.

### Summary

Provided are a time synchronization method and apparatus, so as to at least solve the problem in the related technology that using the time difference between the network clock slave device and the network time source to directly perform a one-time correction may cause the correction amplitude of the time difference to be too large and influence the synchronization effect.

According to one aspect of the present invention, a time synchronization method is provided according to appended claim 1.

In the above method, acquiring the time deviation between the network clock slave device and the network time source includes: calculating a time difference between time of the network clock slave device and time of the network time source; executing jitter suppression processing on the time difference to acquire an effective time difference; and subjecting the effective time difference to filtering processing of the filter to acquire the time deviation between the network clock slave device and the network time source.

In the above method, before executing the jitter suppression processing on the time difference to acquire the effective time difference, the method further includes: if the time difference is smaller than a preset first threshold, not adjusting current time of the network clock slave device.

In the above method, executing the jitter suppression processing on the time difference to acquire the effective time difference includes: judging whether the time difference is within a preset jitter range; and when the time difference is not within the preset jitter range, executing jitter elimination processing on the time difference.

In the above method, subjecting the effective time difference to the filtering processing of the filter to acquire the time deviation between the network clock slave device and the network time source includes: judging whether the effective time difference exceeds a preset second threshold; if yes, determining the time deviation to be equal to the effective time difference; and if not, performing filtering processing on the effective time difference to acquire the time deviation.

In the above method, adjusting step by step the time deviation between the network clock slave device and the network time source further includes: saving the time deviation in a cache; determining the corresponding adjustment value according to a numerical value saved in the cache; and feeding back the adjustment value to the cache after the time deviation is adjusted.

In the above method, the adjustment value includes at least one of: a correction step length and a gradient.

According to another aspect of the present invention, a time synchronization apparatus is provided according to appended claim 8.

In the above apparatus, the acquisition module includes: a calculation unit configured to calculate a time difference between time of the network clock slave device and time of the network time source; an execution unit configured to execute jitter suppression processing on the time difference to acquire an effective time difference; and a filtering unit configured to subject the effective time difference to filtering processing of a filter to acquire the time deviation between the network clock slave device and the network time source.

In the above apparatus, the execution unit includes: a first judgement subunit configured to judge whether the time difference is within a preset jitter range; and a first processing subunit configured to execute jitter elimination processing on the time difference when the time difference is not within the preset jitter range.

In the above apparatus, the filtering unit includes: a second judgement subunit configured to judge whether the effective time difference exceeds a preset second threshold; a first determination subunit configured to determine the time deviation to be equal to the effective time difference when the output of the second judgement unit is yes; and an acquisition subunit configured to perform filtering processing on the effective time difference to acquire the time deviation when the output of the second judgement unit is no.

In the above apparatus, the determination unit includes: a saving subunit configured to save the time deviation; a second determination subunit configured to determine a corresponding adjustment value according to a numerical value saved in a cache; and a feedback subunit configured to feed back the adjustment value to the cache after the time deviation is adjusted.

In the present invention, replacing the one-time direct correction adopted in the related technology by adjusting step by step the time deviation between a network clock slave device and a network time source solves the problem in the related technology that using the time difference between the network clock slave device and the network time source to directly perform a one-time correction may cause the correction amplitude of the time difference to be too large and influence the synchronization effect, thereby achieving the effect of improving the quality and stability of time synchronization.

### Brief Description of the Drawings

Drawings, provided for further understanding of the present invention and forming a part of the specification, are used to explain the present invention together with embodiments of the present invention rather than to limit the present invention. In the drawings:
Fig. 1 is a schematic diagram of a measurement result of time deviation jitters after simple filtering is adopted according to the related technology;
Fig. 2 is a flowchart of a time synchronization method according to an embodiment of the present invention;
Fig. 3 is a schematic diagram of the statistics of the time deviation jitters after jitter elimination processing of the time synchronization method according to a preferred embodiment of the present invention;
Fig. 4 is a structure diagram of a time synchronization apparatus according to an embodiment of the present invention; and
Fig. 5 is a structure diagram of the time synchronization apparatus according to a preferred embodiment of the present invention.

### Detailed Description of the Embodiments

The present invention is described in detail below with reference to the accompanying drawings and embodiments. Note that, the embodiments of the present invention and the features of the embodiments can be combined with each other if there is no conflict.

Fig. 2 is a flowchart of a time synchronization method according to an embodiment of the present invention. As shown in Fig. 2, the method can include the following processing steps:
step S202: a time deviation between a network clock slave device and a network time source is acquired;
step S204: the time deviation between the network clock slave device and the network time source is adjusted step by step.

In the related technology, the method often used to adjust the time deviation between the network clock slave device and the network time source is to directly perform a one-time correction according to the calculated time deviation, which may cause the correction amplitude to be too large, thereby influencing the quality of time synchronization. According to the method as shown in Fig. 2, when adjusting the time deviation between the network clock slave device and the network time source, the mode of step-by-step correction is used to replace the one-time correction, which solves the problem in the related technology that using a time difference between the network clock slave device and the network time source to directly perform a one-time correction may cause the correction amplitude of the time difference to be too large and influence the synchronization effect, thereby improving the quality and stability of time synchronization.

It is to be noted that the adjustment operation S204 can be performed independently in regular cycles, and can also be triggered by a sampling period of the time difference inputted in S202. In either case, if the calculation of the time difference is non-periodic, then the time interval factor must be considered in the processing flow. For example, in situations where a sampling time interval of the time difference is 1 second, and another time interval is 2 seconds, the frequency domain information obtained from sampling is completely different. Under the circumstances, the adjustment process needs to take the sampling time interval as a parameter to be introduced into the processing flow, so as to calculate related parameters such as jitter change rate, etc.

Preferentially, step S202 may include the following processing steps:
(1) a time difference between the time of the network clock slave device and the time of the network time source is calculated;
(2) jitter suppression processing is executed on the time difference to acquire an effective time difference;
(3) the effective time difference is subjected to filtering processing of a filter to acquire the time deviation between the network clock slave device and the network time source.

In the preferred embodiment of the present invention, in order to make the time synchronization effect of the embodiment of the present invention much better, jitter elimination processing is added before correcting the calculated time difference, which can not only discard or filter abnormal jitters of the time difference but also suppress large-amplitude jitters of the time difference, thereby enabling the slave clock device to maintain stable under the circumstance of relatively large interferences, and improving the quality and stability of the synchronization.

In the preferred implementation process, before executing jitter suppression processing on the time difference to acquire an effective time difference, the following operations may be included: if the time difference is smaller than a preset dead zone scope (i.e. the above-mentioned first threshold), there is no need to adjust the current time of the network clock slave device.

It is to be noted that: not all time deviations have corresponding adjustment values; under certain circumstances, time deviations cannot be completely eliminated, and time deviations are allowed at this moment, so adjustment is not necessary any more, that is, dead zones exist in the adjustment of time deviations, wherein a threshold can be set by a user in advance in the dead zones, so that time deviations smaller than the threshold will not be corrected, that is, the system allows the existence of certain errors, so as to avoid unnecessary repeated operations.

In the preferred implementation process, executing jitter suppression processing on the time difference to acquire an effective time difference may further include the following processing steps:
(1) it is judged whether the time difference is within a preset jitter range;
(2) when the time difference is not within the preset jitter range, jitter elimination processing is executed on the time difference.

In a preferred embodiment, the jitter range is the range of variation of the time difference inputted during several sampling periods in a period of time. Jitter suppression is mainly used to suppress the rapid and large-amplitude variation of an inputted time difference signal. Data with a large jitter can be considered as abnormal data, and discarding abnormal data is a relatively simple way of realizing jitter suppression. Data left after jitter suppression processing is an effective time difference.

In addition, it is to be noted that executing jitter elimination processing on the time difference can include but not limited to the above-mentioned method of first judging the jitter range and then processing the data that is beyond the range. It can further include other methods such as adding a jitter elimination filter to perform jitter elimination filtering on the time difference so as to directly acquire the effective time difference.

In the preferred implementation process, performing filtering processing on the effective time difference via a filter to acquire the time deviation between the network clock slave device and the network time source may further include the following processing steps:
(1) it is judged whether the effective time difference exceeds a preset smooth correction threshold (i.e. the above-mentioned second threshold);
(2) if yes, the time deviation is determined to be equal to the effective time difference;
(3) if not, filtering processing is performed on the effective time difference to acquire the time deviation.

In a preferred embodiment, filtering processing is mainly used to smooth an inputted effective time difference signal via the processing when the time difference signal is within the smooth correction threshold, so as to finally acquire a relatively stable and reliable time deviation signal. Under the circumstance that the inputted effective time difference exceeds the smooth correction threshold, directly taking this time difference as a time deviation signal can directly transform same into an adjustment value so as to correct the time of the network clock slave device; it is also possible to directly send this time deviation to S204 so that S204 can decide the adjustment value and perform a correction.

For example, it is needed to adjust the time from the year 1980 to the year 2010, and the time difference signal remains in the year 2010 after this time hopping. Data sampled in this time hopping process has very large jitters, and can be regarded as abnormal data and be discarded in the jitter suppression link. After several sampling, the amplitude of the sampled data after the time hopping completes is still very large, but the jitter is relatively small, and the data is regarded as an effective time difference after the jitter suppression link. A correction step length value can be directly allocated to this effective time difference. If this step length value is equal to the calculated effective time difference, the effect thereof is to correct immediately; and if a very large correction step length is selected, such as 1 year, the synchronization can also be completed after several corrections.

Preferentially, step S204 may include the following processing steps:
(1) a corresponding adjustment value is determined according to the time deviation;
(2) the adjustment value is used to adjust step by step the time deviation between the network clock slave device and the network time source.

In a preferred embodiment, the relationship between an adjustment value and a time deviation can be either a linear function or a non-linear function. Under normal conditions, the relationship is a non-linear function. For example, when the deviation outputted after filtering is greater than 10 us, the step length is infinity; when the deviation is between 10 us and 500 ns, the step length is 100 ns; when the deviation is between 500 ns and 5 ns, the step length is 5 ns; and when the deviation is smaller than 5 ns, the step length is 0, i.e. not correcting. The above-mentioned function is composed of 4 non-linear segments, wherein the value 5 ns is defined as a dead zone. Those smaller than this value will not produce a correction output (the adjustment value is 0).

In addition, after acquiring the time deviation, it is needed to adjust step by step the system clock of the network clock slave device according to a certain period and an adjustment value corresponding to the time deviation, and output same according to a certain amplitude (step length) each time, so that the deviation between the adjusted time and the inputted network time decreases step by step, and keep tracking so as to realize the synchronization between the slave device and the network time source and avoid the situation where a saltation occurs when the correction amplitude is relatively large.

Additionally, the acquisition of an adjustment value can adopt either the mode of segmented selection or the mode of self-adaptive calculation. For relatively large deviations, it is possible to perform a direct correction or adopt a relatively large adjustment value to perform rapid tracking. For relatively small deviations, a relatively small adjustment value is adopted to perform tracking. Segmented selection can be performed as required on adjustment values adopted by different deviation ranges, and a self-adaptive algorithm can also be adopted to perform automatic step length calculation according to the change rate of the time deviation. The adjustment value adopts the direct correction mode only during time hopping that exceeds the predetermined amplitude, and usually cannot be too large under other circumstances, the purpose of which is to restrict the device time from changing too rapidly and to improve the stability.

Preferentially, the above-mentioned step S204 may further include the following processing steps:
(1) the time deviation is saved in a cache;
(2) a corresponding adjustment value is determined according to the numerical value saved in the cache;
(3) the adjustment value is fed back to the cache after the time deviation is adjusted.

In a preferred embodiment, the adjustment operation S204 can be performed independently in regular cycles, and can also be triggered by a sampling period of the time difference inputted in S202. The independent regular cycle mode refers to that after S202 calculates a time deviation, S204 repeats the correction according to the calculated step length until the cached deviation value tends to 0. In this process, when a new deviation is calculated, S202 will refresh the cached time deviation value. The mode of triggering by a sampling period of the inputted time difference refers to that S202 and S204 both work in the time deviation sampling period, and every time the time deviation is sampled and calculated, the complete calculation flow is triggered once and a correction is produced. It is often mainly in the independent regular cycle working mode that requires to cache the time deviation inputted in S204, so as to maintain the independent regular cycle operations of S204. Under this circumstance, it is required to accordingly modify the time deviation cache after each adjustment, so as to ensure that the result of multiple corrections keeps consistent with expectation.

Preferentially, the above-mentioned step S204 may further include the following processing steps:
(1) the adjustment value is fed back to the filter;
(2) the current filtering parameters in the filter are modified according to the adjustment value.

In the preferred embodiment, the adjustment value needs to be fed back to the filter for processing every time after the system time is adjusted. During filtering processing, some data filtering parameters are usually set, and the cache data stored in the filter can also be regarded as a part of the filtering parameters. The data and parameters stored in the filter actually reflect the change situations of the time deviation before adjustment. The adjustment value needs to be fed back to the filter for processing every time after the system time is adjusted. When the next filtering calculation is performed, the processed filter parameters can improve the speed and performance of the time correction. For example, for an average smoothing filter, deducting the value of the conducted adjustment from the data currently saved in the filter cache queue will reduce the influence of historical data when the next time deviation is added into the operation. Certainly, it is possible to empty the filter cache and reset the filter so as to acquire the current time difference and perform the next adjustment.

Preferentially, the above-mentioned adjustment value may include but not limited to at least one of: a correction step length and a gradient.

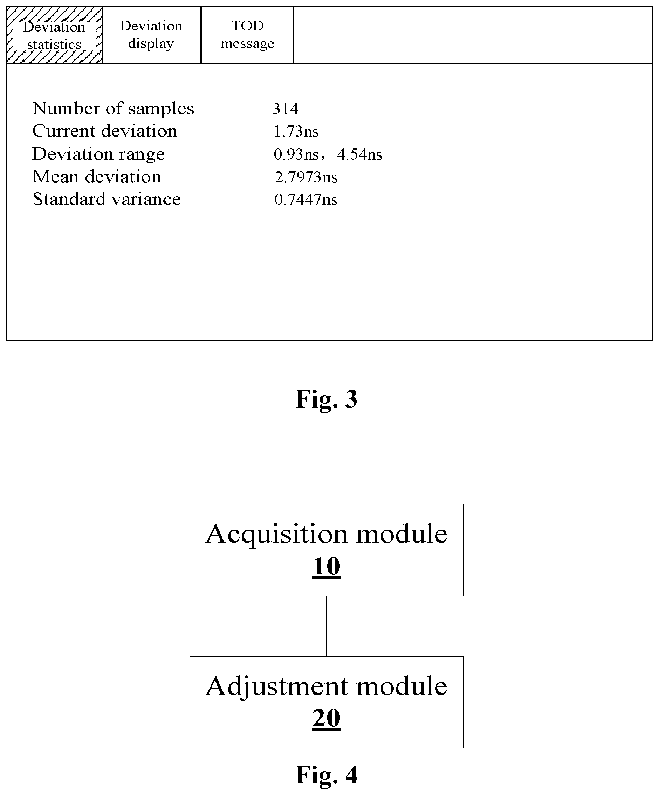

Fig. 3 is a schematic diagram of the statistics of the time deviation jitters after jitter elimination processing of the time synchronization method according to a preferred embodiment of the present invention. As shown in Fig. 3, the time deviation range after jitter elimination processing is 0.93 ns-4.54 ns, that is, the jitter range of the time deviation is 3.61 ns; and in the related technology as shown in Fig. 1, the time deviation jitter range after simple filtering is close to 10 ns; therefore, adopting the jitter elimination processing of the present invention will have a better effect.

The above-mentioned adjustment value taken as a correction step length will be taken as an example below to further describe the above-mentioned preferred implementation process. The time synchronization method mainly includes the following processing steps:
step A. it is calculated that a sampling time difference between the network clock slave device and the network time source is 300 nanoseconds;
step B. the jitter range is set to be 0 nanosecond to 500 nanoseconds, wherein because 300 nanoseconds is within the range of 0 nanosecond to 500 nanoseconds, 300 nanoseconds will not be taken as an abnormal jitter and eliminated by filtering, and step C is executed;
step C. an average smoothing filter is selected, and after performing filtering processing on the 300 nanosecond time difference, the 300 nanosecond time difference is acquired and saved in the filter;
   in the preferred embodiment, different filtering parameters can be selected according to correction working frequencies of different protocols.
Step D. the corrections step length is selected as 10 nanoseconds according to the 300 nanosecond time difference, and this correction step length is used to determine that the correction value is 10 nanoseconds;
step E. the system clock of the slave device is corrected according to the fact that the correction step length is 10 nanoseconds, and the correction step length is fed back to the filter in step C;
step F. the fed back 10 nanosecond correction step length is subtracted from the 300 nanoseconds saved in the filter to reduce the influence of the filter cache on the subsequent input, return to step E or A to continue execution, and the above-mentioned process is repeated to adjust the time deviation step by step so as to realize stable time synchronization.

Fig. 4 is a structure diagram of a time synchronization apparatus according to an embodiment of the present invention. As shown in Fig. 4, the time synchronization apparatus can include: an acquisition module **10** configured to acquire a time deviation between a network clock slave device and a network time source; and an adjustment module **20** configured to adjust step by step the time deviation between the network clock slave device and the network time source.

By means of the apparatus as shown in Fig. 4, after the acquisition module **10** acquires the time deviation between the network clock slave device and the network time source, the adjustment module **20** adjusts step by step the time deviation between the network clock slave device and the network time source. Therefore, the problem in the related technology that using a time difference between the network clock slave device and the network time source to directly perform a one-time correction may cause the correction amplitude of the time difference to be too large and influence the synchronization effect is solved, thereby improving the quality and stability of time synchronization.

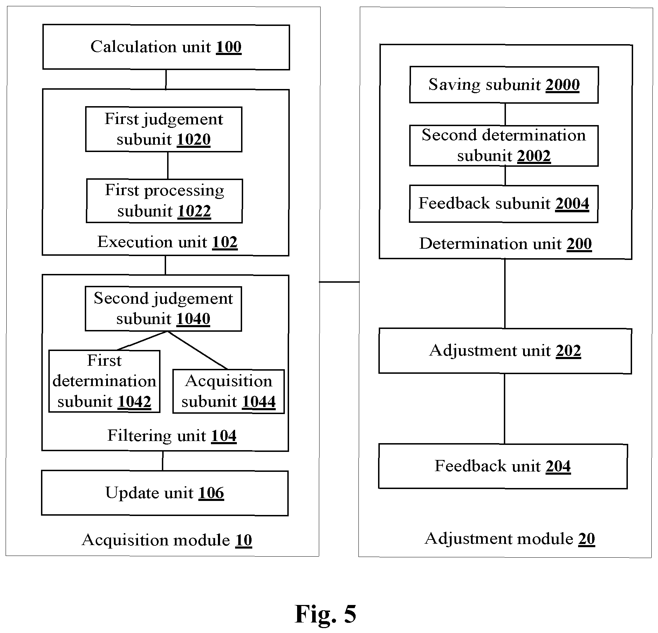

Preferentially, as shown in Fig. 5, the above-mentioned acquisition module **10** can include: a calculation unit **100** configured to calculate a time difference between the time of the network clock slave device and the time of the network time source; an execution unit **102** configured to execute jitter suppression processing on the time difference to acquire an effective time difference; and a filtering unit **104** configured to subject the effective time difference to filtering processing of a filter to acquire the time deviation between the network clock slave device and the network time source.

Preferentially, as shown in Fig. 5, the above-mentioned execution unit **102** can include: a first judgement subunit **1020** configured to judge whether the time difference is within a preset jitter range; and a first processing subunit **1022** configured to execute jitter elimination processing on the time difference when the time difference is not within the preset jitter range.

Preferentially, as shown in Fig. 5, the above-mentioned filtering unit **104** can include: a second judgement subunit **1040** configured to judge whether the effective time difference exceeds a preset second threshold; a first determination subunit **1042** configured to determine the time deviation to be equal to the effective time difference when the output of the second judgement unit is yes; and an acquisition subunit **1044** configured to perform filtering processing on the effective time difference to acquire the time deviation when the output of the second judgement unit is no.

Preferentially, as shown in Fig. 5, the above-mentioned adjustment module **20** can include: a determination unit **200** configured to determine a corresponding adjustment value according to the time deviation, wherein the adjustment value and the time deviation has an increasing function relationship; and an adjustment unit **202** configured to use the adjustment value to adjust step by step the time deviation between the network clock slave device and the network time source.

Preferentially, as shown in Fig. 5, the above-mentioned determination unit **200** can include: a saving subunit **2000** configured to save the time deviation; a second determination subunit **2002** configured to determine a corresponding adjustment value according to the numerical value saved in a cache; and a feedback subunit **2004** configured to feed back the adjustment value to the cache after the time deviation is adjusted.

Preferentially, as shown in Fig. 5, the above-mentioned adjustment module **20** can further include: a feedback unit **204** configured to feed back the adjustment value to the filter; and the acquisition module **10** can further include: an update unit **106** configured to modify the current filtering parameters in the filter according to the adjustment value.

In the preferred implementation process, the above-mentioned adjustment value can include but not limited to at least one of: a correction step length and a gradient.

It can be seen from the above description that the present invention achieves the following technical effect: by adjusting the time deviation step by step so as to suppress the output phase transient, the embodiments of the present invention improve the reliability and stability of time synchronization. At the same time, the embodiments of the present invention also feed back the adjustment value to the filter so that it can join in the next sampling calculation, thus making the time synchronization effect more stable and reliable. The embodiments of the present invention also perform suppression on large amplitude abnormal jitters in the process of jitter suppression, so as to not allow the vibrating abnormal data to join in the calculation of the final adjustment, thereby further improving the stability of time synchronization.

Obviously, those skilled in the art should know that each of the mentioned modules or steps of the present invention can be realized by universal computing devices; the modules or steps can be focused on a single computing device, or distributed on the network formed by multiple computing devices; selectively, they can be realized by the program codes which can be executed by the computing device; thereby, the modules or steps can be stored in the storage device and executed by the computing device; and under some circumstances, the shown or described steps can be executed in different orders, or can be independently manufactured as each integrated circuit module, or multiple modules or steps thereof can be manufactured to be a single integrated circuit module, thus to be realized. In this way, the present invention is not restricted to any particular hardware and software combination.

The descriptions above are only preferred embodiments of the present invention, which are not used to restrict the present invention, and for those skilled in the art, the present invention may have various changes and variations. Any amendments, within the principle of the present invention are all included in the scope of protection as defined in the appended claims of the present invention.

## Claims

1. A time synchronization method, **characterized by** comprising:
acquiring a time deviation between a network clock slave device and a network time source (S202); and
adjusting step by step the time deviation between the network clock slave device and the network time source (S204);
wherein adjusting step by step the time deviation between the network clock slave device and the network time source comprises: determining a corresponding adjustment value according to the time deviation; and using the adjustment value to adjust step by step the time deviation between the network clock slave device and the network time source; wherein adjusting step by step the time deviation between the network clock slave device and the network time source further comprises: feeding back the adjustment value to a smoothing filter; and modifying current filtering parameters in the smoothing filter according to the adjustment value.

2. The method according to claim 1, **characterized in that** acquiring the time deviation between the network clock slave device and the network time source comprises:
calculating a time difference between time of the network clock slave device and time of the network time source;
executing jitter suppression processing on the time difference to acquire an effective time difference; and
subjecting the effective time difference to filtering processing of the smoothing filter to acquire the time deviation between the network clock slave device and the network time source.

3. The method according to claim 2, **characterized in that** before executing the jitter suppression processing on the time difference to acquire the effective time difference, the method further comprises:
if the time difference is smaller than a preset first threshold, not adjusting current time of the network clock slave device.

4. The method according to claim 2, **characterized in that** executing the jitter suppression processing on the time difference to acquire the effective time difference comprises:
judging whether the time difference is within a preset jitter range; and
when the time difference is not within the preset jitter range, executing jitter elimination processing on the time difference.

5. The method according to claim 2, **characterized in that** subjecting the effective time difference to the filtering processing of the smoothing filter to acquire the time deviation between the network clock slave device and the network time source comprises:
judging whether the effective time difference exceeds a preset second threshold;
if yes, determining the time deviation to be equal to the effective time difference; and
if not, performing filtering processing on the effective time difference to acquire the time deviation.

6. The method according to claim 1, **characterized in that** adjusting step by step the time deviation between the network clock slave device and the network time source further comprises:
saving the time deviation in a cache;
determining the corresponding adjustment value according to a numerical value saved in the cache; and
feeding back the adjustment value to the cache after the time deviation is adjusted.

7. The method according to claim 6, **characterized in that** the adjustment value comprises at least one of: a correction step length and a gradient.

8. A time synchronization apparatus, **characterized by** comprising:
an acquisition module (10) configured to acquire a time deviation between a network clock slave device and a network time source; and
an adjustment module (20) configured to adjust step by step the time deviation between the network clock slave device and the network time source;
wherein the adjustment module (20) comprises: a determination unit (200) configured to determine a corresponding adjustment value according to the time deviation; and an adjustment unit (202) configured to use the adjustment value to adjust step by step the time deviation between the network clock slave device and the network time source; wherein the adjustment module (20) further comprises: a feedback unit (204) configured to feed back the adjustment value to a smoothing filter; and the acquisition module (10) further comprises: an update unit (106) configured to modify current filtering parameters in the smoothing according to the adjustment value.

9. The apparatus according to claim 8, **characterized in that** the acquisition module comprises:
a calculation unit (100) configured to calculate a time difference between time of the network clock slave device and time of the network time source;
an execution unit (102) configured to execute jitter suppression processing on the time difference to acquire an effective time difference; and
a filtering unit (104) configured to subject the effective time difference to filtering processing of the smoothing filter to acquire the time deviation between the network clock slave device and the network time source.

10. The apparatus according to claim 9, **characterized in that** the execution unit (102) comprises:
a first judgement subunit (1020) configured to judge whether the time difference is within a preset jitter range; and
a first processing subunit (1022) configured to execute jitter elimination processing on the time difference when the time difference is not within the preset jitter range.

11. The apparatus according to claim 9, **characterized in that** the filtering unit (104) comprises:
a second judgement subunit (1040) configured to judge whether the effective time difference exceeds a preset second threshold;
a first determination subunit (1042) configured to determine the time deviation to be equal to the effective time difference when the output of the second judgement unit is yes; and
an acquisition subunit (1044) configured to perform filtering processing on the effective time difference to acquire the time deviation when the output of the second judgement unit is no.

12. The apparatus according to claim 8, **characterized in that** the determination unit comprises:
a saving subunit (2000) configured to save the time deviation;
a second determination (2002) subunit configured to determine a corresponding adjustment value according to a numerical value saved in a cache; and
a feedback subunit (2004) configured to feed back the adjustment value to the cache after the time deviation is adjusted.

## Patentansprüche

1. Zeitsynchronisationsverfahren, **dadurch gekennzeichnet, dass** es Folgendes umfasst:
Erfassen einer Zeitabweichung zwischen einer Netzwerk-Takt-Slave-Vorrichtung und einer Netzwerk-Zeitquelle (S202); und
schrittweise Einstellen der Zeitabweichung zwischen der Netzwerk-Takt-Slave-Vorrichtung und der Netzwerk-Zeitquelle (S204);
wobei das schrittweise Einstellen der Zeitabweichung zwischen der Netzwerk-Takt-Slave-Vorrichtung und der Netzwerk-Zeitquelle umfasst: Bestimmen eines entsprechenden Einstellungswertes gemäß der Zeitabweichung; und Verwenden des Einstellungswertes zum schrittweise Einstellen der Zeitabweichung zwischen der Netzwerk-Takt-Slave-Vorrichtung und der Netzwerk-Zeitquelle; wobei das schrittweise Einstellen der Zeitabweichung zwischen der Netzwerk-Takt-Slave-Vorrichtung und der Netzwerk-Zeitquelle weiter umfasst: Rückkoppeln des Einstellungswertes zu einem Glättungsfilter; und Modifizieren derzeitiger Filterparameter in dem Glättungsfilter gemäß dem Einstellungswert.

2. Verfahren nach Anspruch 1, **dadurch gekennzeichnet, dass** das Erfassen der Zeitabweichung zwischen der Netzwerk-Takt-Slave-Vorrichtung und der Netzwerk-Zeitquelle umfasst:
Berechnen einer Zeitdifferenz zwischen der Zeit der Netzwerk-Takt-Slave-Vorrichtung und der Zeit der Netzwerk-Zeitquelle;
Ausführen der Jitterunterdrückung an der Zeitdifferenz zum Erfassen einer effektiven Zeitdifferenz; und
Unterziehen der effektiven Zeitdifferenz einer Filterverarbeitung des Glättungsfilters zum Erfassen der Zeitabweichung zwischen der Netzwerk-Takt-Slave-Vorrichtung und der Netzwerk-Zeitquelle.

3. Verfahren nach Anspruch 2, **dadurch gekennzeichnet, dass** vor Ausführen der Jitterunterdrückung an der Zeitdifferenz zum Erfassen der effektiven Zeitdifferenz das Verfahren weiter umfasst:
falls die Zeitdifferenz kleiner als ein voreingestellter erster Schwellenwert ist, kein Einstellen der derzeitigen Zeit der Netzwerk-Takt-Slave-Vorrichtung.

4. Verfahren nach Anspruch 2, **dadurch gekennzeichnet, dass** das Ausführen der Jitterunterdrückung an der Zeitdifferenz zum Erfassen der effektiven Zeitdifferenz umfasst:
Beurteilen, ob die Zeitdifferenz innerhalb eines voreingestellten Jitterbereichs liegt; und,
wenn die Zeitdifferenz nicht innerhalb des voreingestellten Jitterbereichs liegt, Ausführen der Jitterbeseitigungsverarbeitung an der Zeitdifferenz.

5. Verfahren nach Anspruch 2, **dadurch gekennzeichnet, dass** das Unterziehen der effektiven Zeitdifferenz der Filterverarbeitung des Glättungsfilters zum Erfassen der Zeitabweichung zwischen der Netzwerk-Takt-Slave-Vorrichtung und der Netzwerk-Zeitquelle umfasst:
Beurteilen, ob die effektive Zeitdifferenz einen voreingestellten zweiten Schwellenwert überschreitet;
wenn ja, Bestimmen, dass die Zeitabweichung der effektiven Zeitdifferenz entspricht; und,
wenn nein, Durchführen einer Filterverarbeitung an der effektiven Zeitdifferenz zum Erfassen der Zeitabweichung.

6. Verfahren nach Anspruch 1, **dadurch gekennzeichnet, dass** das schrittweise Einstellen der Zeitabweichung zwischen der Netzwerk-Takt-Slave-Vorrichtung und der Netzwerk-Zeitquelle weiter umfasst:
Speichern der Zeitabweichung in einem Zwischenspeicher;
Bestimmen des entsprechenden Einstellungswertes gemäß einem numerischen Wert, der in dem Zwischenspeicher gespeichert ist; und
Rückkoppeln des Einstellungswertes zum Zwischenspeicher nach Einstellen der Zeitabweichung.

7. Verfahren nach Anspruch 6, **dadurch gekennzeichnet, dass** der Einstellungswert mindestens eines von Folgendem umfasst: eine Korrekturschrittlänge und einen Gradienten.

8. Zeitsynchronisationsvorrichtung, **dadurch gekennzeichnet, dass** diese Folgendes umfasst:
ein Erfassungsmodul (10), konfiguriert zum Erfassen einer Zeitabweichung zwischen einer Netzwerk-Takt-Slave-Vorrichtung und einer Netzwerk-Zeitquelle; und
ein Einstellungsmodul (20), konfiguriert zum schrittweise Einstellen der Zeitabweichung zwischen der Netzwerk-Takt-Slave-Vorrichtung und der Netzwerk-Zeitquelle;
wobei das Einstellungsmodul (20) umfasst: eine Bestimmungseinheit (200), konfiguriert zum Bestimmen eines entsprechenden Einstellungswertes gemäß der Zeitabweichung; und eine Einstellungseinheit (202), konfiguriert zum Verwenden des Einstellungswertes zum schrittweise Einstellen der Zeitabweichung zwischen der Netzwerk-Takt-Slave-Vorrichtung und der Netzwerk-Zeitquelle; wobei das Einstellungsmodul (20) weiter umfasst: eine Rückkopplungseinheit (204), konfiguriert zum Rückkoppeln des Einstellungswertes zu einem Glättungsfilter; und das Erfassungsmodul (10) weiter umfasst: eine Aktualisierungseinheit (106), konfiguriert zum Modifizieren der derzeitigen Filterparameter beim Glätten gemäß dem Einstellungswert.

9. Vorrichtung nach Anspruch 8, **dadurch gekennzeichnet, dass** das Erfassungsmodul umfasst:
eine Berechnungseinheit (100), konfiguriert zum Berechnen einer Zeitdifferenz zwischen der Zeit der Netzwerk-Takt-Slave-Vorrichtung und der Zeit der Netzwerk-Zeitquelle;
eine Ausführungseinheit (102), konfiguriert zum Ausführen der Jitterunterdrückung an der Zeitdifferenz zum Erfassen einer effektiven Zeitdifferenz; und
eine Filtereinheit (104), konfiguriert zum Unterziehen der effektiven Zeitdifferenz einer Filterverarbeitung des Glättungsfilters zum Erfassen der Zeitabweichung zwischen der Netzwerk-Takt-Slave-Vorrichtung und der Netzwerk-Zeitquelle.

10. Vorrichtung nach Anspruch 9, **dadurch gekennzeichnet, dass** die Ausführungseinheit (102) umfasst:
eine erste Beurteilungsuntereinheit (1020), konfiguriert zum Beurteilen, ob die Zeitdifferenz innerhalb eines voreingestellten Jitterbereichs liegt; und
ein erste Verarbeitungsuntereinheit (1022), konfiguriert zum Ausführen einer Jitterbeseitigungsverarbeitung an der Zeitdifferenz, wenn die Zeitdifferenz nicht innerhalb des voreingestellten Jitterbereichs liegt.

11. Vorrichtung nach Anspruch 9, **dadurch gekennzeichnet, dass** die Filtereinheit (104) umfasst:
eine zweite Beurteilungsuntereinheit (1040), konfiguriert zum Beurteilen, ob die effektive Zeitdifferenz einen voreingestellten zweiten Schwellenwert überschreitet;
eine erste Bestimmungsuntereinheit (1042), konfiguriert zum Bestimmen, dass die Zeitabweichung der effektiven Zeitdifferenz entspricht, wenn die Ausgabe der zweiten Beurteilungseinheit ja ist; und
eine Erfassungsuntereinheit (1044) konfiguriert zum Durchführen einer Filterverarbeitung an der effektiven Zeitdifferenz zum Erfassen der Zeitabweichung, wenn die Ausgabe der zweiten Beurteilungseinheit nein ist.

12. Vorrichtung nach Anspruch 8, **dadurch gekennzeichnet, dass** die Bestimmungseinheit umfasst:
eine Speicheruntereinheit (2000), konfiguriert zum Speichern der Zeitabweichung;
eine zweite Bestimmungsuntereinheit (2002), konfiguriert zum Bestimmen eines entsprechenden Einstellungswertes gemäß einem numerischen Wert, der in einem Zwischenspeicher gespeichert ist; und
eine Rückkopplungsuntereinheit (2004), konfiguriert zum Rückkoppeln des Einstellungswertes zum Zwischenspeicher nach Einstellen der Zeitabweichung.

## Revendications

1. Procédé de synchronisation temporelle, **caractérisé en ce qu'**il comprend :
l'obtention d'un écart temporel entre un dispositif esclave d'horloge de réseau et une source temporelle de réseau (S202) ; et
le réglage étape par étape de l'écart temporel entre le dispositif esclave d'horloge de réseau et la source temporelle de réseau (S204) ;
dans lequel le réglage étape par étape de l'écart temporel entre le dispositif esclave d'horloge de réseau et la source temporelle de réseau comprend : la détermination d'une valeur de réglage correspondante selon l'écart temporel ; et l'utilisation de la valeur de réglage pour régler étape par étape l'écart temporel entre le dispositif esclave d'horloge de réseau et la source temporelle de réseau ; dans lequel le réglage étape par étape de l'écart temporel entre le dispositif esclave d'horloge de réseau et la source temporelle de réseau comprend en outre : le renvoi de la valeur de réglage à un filtre de lissage ; et la modification de paramètres de filtrage actuels dans le filtre de lissage selon la valeur de réglage.

2. Procédé selon la revendication 1, **caractérisé en ce que** l'obtention de l'écart temporel entre le dispositif esclave d'horloge de réseau et la source temporelle de réseau comprend :
le calcul d'une différence temporelle entre l'heure du dispositif esclave d'horloge de réseau et l'heure de la source temporelle de réseau ;
l'exécution du processus de suppression de gigue sur la différence temporelle pour obtenir une différence temporelle effective ; et
la soumission de la différence temporelle effective au processus de filtrage du filtre de lissage pour obtenir l'écart temporel entre le dispositif esclave d'horloge de réseau et la source temporelle de réseau.

3. Procédé selon la revendication 2, **caractérisé en ce qu'**avant l'exécution du processus de suppression de gigue sur la différence temporelle pour obtenir la différence temporelle effective, le procédé comprend en outre :
si la différence temporelle est inférieure à un premier seuil préétabli, le non réglage de l'heure actuelle du dispositif esclave d'horloge de réseau.

4. Procédé selon la revendication 2, **caractérisé en ce que** l'exécution du processus de suppression de gigue sur la différence temporelle pour obtenir la différence temporelle effective comprend :
le fait de juger si la différence temporelle est comprise dans une plage de gigue préétablie ; et
lorsque la différence temporelle n'est pas comprise dans la plage de gigue préétablie, l'exécution du processus de suppression de gigue sur la différence temporelle.

5. Procédé selon la revendication 2, **caractérisé en ce que** la soumission de la différence temporelle effective au processus de filtrage du filtre de lissage pour obtenir l'écart temporel entre le dispositif esclave d'horloge de réseau et la source temporelle de réseau comprend :
le fait de juger si la différence temporelle effective dépasse un deuxième seuil préétabli ;
si oui, le fait de déterminer si l'écart temporel est égal à la différence temporelle effective ; et
si non, la réalisation du processus de filtrage sur la différence temporelle effective pour obtenir l'écart temporel.

6. Procédé selon la revendication 1, **caractérisé en ce que** le réglage étape par étape de l'écart temporel entre le dispositif esclave d'horloge de réseau et la source temporelle de réseau comprend en outre :
la sauvegarde de l'écart temporel dans un cache ;
la détermination de la valeur de réglage correspondante selon une valeur numérique sauvegardée dans le cache ; et
le renvoi de la valeur de réglage au cache après que l'écart temporel est réglé.

7. Procédé selon la revendication 6, **caractérisé en ce que** la valeur de réglage comprend au moins l'une parmi : une longueur d'étape de correction et un gradient.

8. Appareil de synchronisation temporelle, **caractérisé en ce qu'**il comprend :
un module d'obtention (10) configuré pour obtenir un écart temporel entre un dispositif esclave d'horloge de réseau et une source temporelle de réseau ; et
un module de réglage (20) configuré pour régler étape par étape l'écart temporel entre le dispositif esclave d'horloge de réseau et la source temporelle de réseau ;
dans lequel le module de réglage (20) comprend : une unité de détermination (200) configurée pour déterminer une valeur de réglage correspondante selon l'écart temporel ; et une unité de réglage (202) configurée pour utiliser la valeur de réglage pour régler étape par étape l'écart temporel entre le dispositif esclave d'horloge de réseau et la source temporelle de réseau ; dans lequel le module de réglage (20) comprend en outre : une unité de renvoi (204) configurée pour renvoyer la valeur de réglage à un filtre de lissage ; et le module d'obtention (10) comprend en outre : une unité de mise à jour (106) configurée pour modifier des paramètres de filtrage actuels dans le lissage selon la valeur de réglage.

9. Appareil selon la revendication 8, **caractérisé en ce que** le module d'obtention comprend :
une unité de calcul (100) configurée pour calculer une différence temporelle entre l'heure du dispositif esclave d'horloge de réseau et l'heure de la source temporelle de réseau ;
une unité d'exécution (102) configurée pour exécuter le processus de suppression de gigue sur la différence temporelle pour obtenir une différence temporelle effective ; et
une unité de filtrage (104) configurée pour soumettre la différence temporelle effective au processus de filtrage du filtre de lissage pour obtenir l'écart temporel entre le dispositif esclave d'horloge de réseau et la source temporelle de réseau.

10. Appareil selon la revendication 9, **caractérisé en ce que** l'unité d'exécution (102) comprend :
une première sous-unité de jugement (1020) configurée pour juger si la différence temporelle est comprise dans une plage de gigue préétablie ; et
une première sous-unité de processus (1022) configurée pour exécuter le processus de suppression de gigue sur la différence temporelle lorsque la différence temporelle n'est pas comprise dans la plage de gigue préétablie.

11. Appareil selon la revendication 9, **caractérisé en ce que** l'unité de filtrage (104) comprend :
une deuxième sous-unité de jugement (1040) configurée pour juger si la différence temporelle effective dépasse un deuxième seuil préétabli ;
une première sous-unité de détermination (1042) configurée pour déterminer si l'écart temporel est égal à la différence temporelle effective lorsque le résultat de la deuxième unité de jugement est oui ; et
une sous-unité d'obtention (1044) configurée pour réaliser le processus de filtrage sur la différence temporelle effective pour obtenir l'écart temporel lorsque le résultat de la deuxième unité de jugement est non.

12. Appareil selon la revendication 8, **caractérisé en ce que** l'unité de détermination comprend :
une sous-unité de sauvegarde (2000) configurée pour sauvegarder l'écart temporel ;
une deuxième sous-unité de détermination (2002) configurée pour déterminer une valeur de réglage correspondante selon une valeur numérique sauvegardée dans un cache ; et
une sous-unité de renvoi (2004) configurée pour renvoyer la valeur de réglage au cache après que l'écart temporel est réglé.
